Europäisches Patentamt

European Patent Office

Office européen des brevets

(11) Veröffentlichungsnummer: **0 005 237**
**A1**

(12) ## EUROPÄISCHE PATENTANMELDUNG

(21) Anmeldenummer: **79101254.5**

(22) Anmeldetag: **26.04.79**

(51) Int. Cl.²: **A 01 K 1/06, A 01 K 1/12**

(30) Priorität: **27.04.78 DE 2818513**

(43) Veröffentlichungstag der Anmeldung: **14.11.79**
**Patentblatt 79/23**

(84) Benannte Vertragsstaaten: **BE CH FR IT NL**

(71) Anmelder: **Vogt, Anselm Josef, Klosterweg 6, D-8941 Börwang (DE)**

(72) Erfinder: **Vogt, Anselm Josef, Klosterweg 6, D-8941 Börwang (DE)**

(74) Vertreter: **Pfister, Helmut, Dipl.-Ing., Buxacher Strasse 9, D-8940 Memmingen/Bayern (DE)**

(54) **Selbstfanggatter für Rinder.**

(57) Das Selbstfanggatter für Rinder umfaßt einen verschwenkbaren Holm (2), der aus einer geöffneten Stellung vom Tier durch Druck auf den unteren Holmteil (11) in eine Schließstellung bewegbar ist, in der eine betätigbare Rast den Holm festhält. Es wird vorgeschlagen, daß das Verschwenklager (1) des Holms in eine Daueröffnungsstellung bewegbar ist, was gegenüber einer Stellung, in der der Holm nicht festgehalten ist, den Vorteil hat, daß das Selbstfanggatter viel weniger Geräusch verursacht und dadurch auch der Verschleiß und die Beunruhigung der Tiere vermindert wird.

Patentanwalt

Dipl.-Ing. **HELMUT PFISTER**

Postscheckkonto München Nr. 1343 39-805
Bankkonto: Bayerische Vereinsbank Memmingen

0005237

21/5

Herr Anselm Josef  V o g t,  Kaufmann
Klosterweg 6,  8961 Börwang

---

Selbstfanggatter für Rinder.

---

Die Erfindung betrifft ein Selbstfanggatter für Rinder
mit einem verschwenkbaren Holm, der aus einer geöffneten
Stellung vom Tier durch Druck auf den unteren Holmteil
in eine Schließstellung bewegbar ist, in der eine betätigbare Raste den Holm festhält.

- 2 -

Für das Auftragsverhältnis gilt die Gebuhrenordnung der Deutschen Patentanwaltskammer.

0005237

Selbstfanggatter der vorerwähnten Art sind bekannt. Sie dienen wesentlich dazu, das Tier dann, wenn es beim Fressen ist, festzuhalten, so daß Stallarbeiten durchgeführt werden können. Andererseits soll aber das Gatter so einstellbar sein, daß das Tier ohne Festhalten den Freßtrog oder Futtertisch erreichen kann. Zu diesem Zweck wird die betätigbare Raste in eine funktionslose Stellung gebracht.

Befindet sich das bekannte Selbstfanggatter in einer Stellung, in der die Raste der Selbstfangeinrichtung funktionslos ist, ergibt sich, daß das Tier fortlaufend den Holm bewegt und diesen aus der vollen Öffnungsstellung in die Schließstellung bringt und umgekehrt. Dieser Vorgang ist mit einer erheblichen Geräuschbildung verbunden, was aus verschiedenen Gründen unerwünscht ist.

Die Erfindung hat es sich zur Aufgabe gemacht, ein Selbstfanggatter der bekannten Art dahingehend weiter zu verbessern, daß die Geräuschbildung und die damit verbundenen Nachteile, wie Verschleiß und Beunruhigung der Tiere, ausgeschaltet werden, ohne daß die sonstige Funktion beeinträchtigt wird. Ein weiteres Ziel besteht dabei insbesondere in einer Lösung der Aufgabe mit geringem Aufwand und auch in einer solchen Weise, daß eine Vielzahl von Selbstfanggattern gemeinsam betätigbar ist.

Die Erfindung erreicht die Lösung dieser Aufgabe dadurch, daß das Verschwenklager des Holmes in eine Daueröffnungsstellung bewegbar ist.

In der Daueröffnungsstellung gelangt beispielsweise der vom Tier zu bewegende Holm in eine Stellung, in der der

0005237

untere Holmteil vom Tier gar nicht mehr erreichbar ist. Insbesondere ist dabei aber Vorsorge getroffen, daß der Holm die Tierbewegungen nicht verhindert. Befindet sich das Schwenklager des Holmes in der Normalstellung, funktioniert das Gatter in herkömmlicher Weise.

Die Bewegung des Lagers im Sinne der Erfindung kann beispielsweise dadurch erreicht werden, daß der Träger des Lagers um ein Gelenk, vorzugsweise in Bodennähe gelagert, verschwenkbar ist. Der Lagerträger, der beispielsweise ebenfalls holmartig gestaltet ist, wird dann ebenso bewegt wie ein Holm eines Schiebegatters. Auf diese Weise wird es möglich, eine Vielzahl von Gattern gleichartig zu betätigen.

In der Zeichnung ist ein Ausführungsbeispiel der Erfindung schematisch dargestellt. Es zeigen:

Fig. 1       eine Ansicht eines Selbstfanggatters gem. der Erfindung und zwar in einer Stellung, in der die Selbstfangeinrichtung funktionslos ist und das Gatter in herkömmlicher Weise funktioniert,

Fig. 2       das Gatter gem. der Fig. 1 in der Daueröffnungsstellung mit stillgelegtem Holm und

Fig. 3       das Selbstfanggatter gem. der Erfindung in der Schließstellung.

Das Selbstfanggatter, das in den Zeichnungen dargestellt ist, besteht aus einem unteren Träger 5 und
einem oberen Träger 6, zwischen denen sich eine
Mehrzahl von Holmen erstreckt. Die Holme 7, 8 und 9
sind starr mit den Trägern 5 und 6 verbunden und begrenzen zum Teil die für den Tierkopf vorgesehene
Öffnung 1o bzw. dienen zur Füllung des Gatters und
verhindern, daß das Tier den Kopf an falscher Stelle
durch das Gatter steckt.

Wenn das Selbstfanggatter in einer Reihe angeordnet
ist, kann beispielsweise der Holm 8 den Holm 7 des
anschließenden nächsten Viehstandes darstellen.

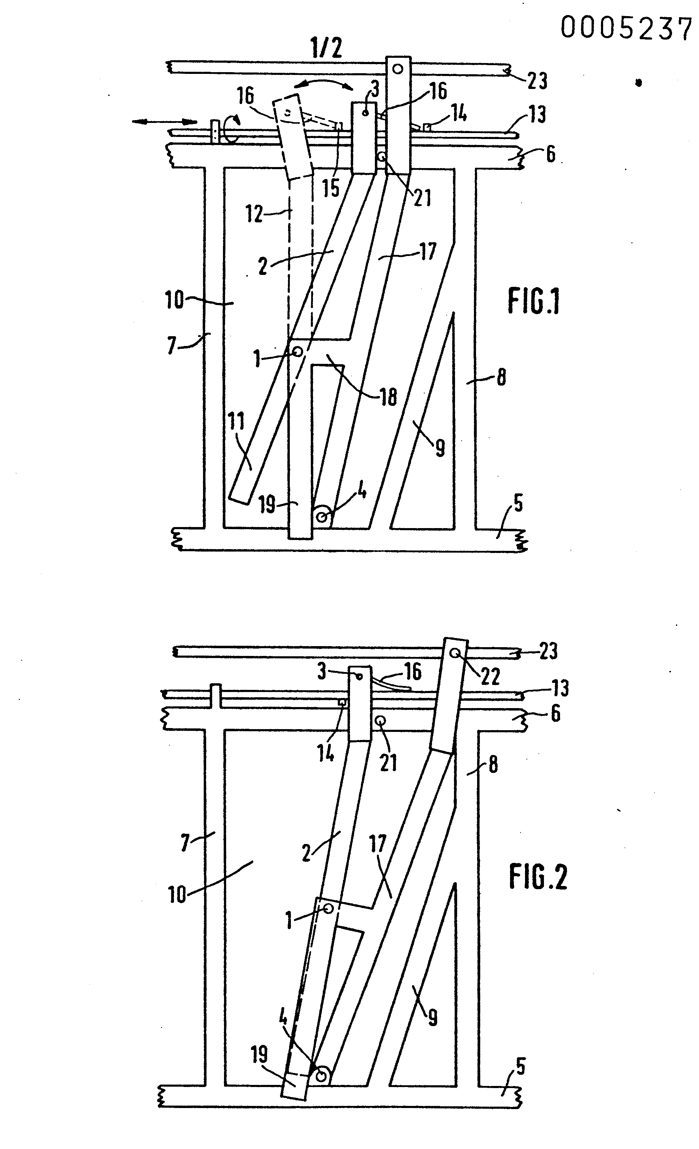

Die Öffnung 1o wird weiter begrenzt durch den Holm
2, der um das Lager 1 verschwenkbar ist. In der
Stellung der Fig. 1 wird das Tier, wenn es den Kopf
zum Freßplatz senkt, den unteren Holmteil 11 betätigen, so daß der Holm 2 um das Gelenk 1 verschwenkt
wird in die mit gestrichelten Linien dargestellte
Stellung 12. Wenn in dieser Stellung keine Verriegelung erfolgt, wird sich beim Heben des Tierkopfes
der Holm 2 wieder in die gezeigte Stellung zurückbewegen usw.. Dabei entsteht das unerwünschte Geräusch.

Die Selbstfangstellung wird dadurch gesichert, daß
durch eine Verschiebung der Stange 13 in horizontaler
Richtung die Raste 14 auf der Stange in eine Funktionsstellung 15 gebracht wird und die Halteklappe 16,
die am oberen Ende des Holmes 2 am Gelenk 3 gelagert
ist, wird hinter der Raste 15 einrasten.

Die Stange 13 kann verschiebbar sein, sie kann aber,
wie in der Fig. 2 angedeutet worden ist, auch verdrehbar sein, so daß durch eine Drehbewegung die Raste 14 ebenfalls außer Funktion gebracht werden kann.

Der Holm 2 ist mit seinem Lager 1 am Holm 17 gelagert, der zu diesem Zweck mit einem Ansatz 18 versehen ist und einem nach unten ragenden Teil 19. Der Teil 19 hat dabei die Aufgabe, den unteren Holmteil 11 abzudecken, so daß das Tier nicht dagegendrücken kann. Dieser Holmteil 19 kann beispielsweise eine U-förmige Gestalt aufweisen, in die der untere Holmteil 11 eintaucht.

Wird der Holm 17 um das Gelenk 4 verschwenkt, wie in der Fig. 2 angedeutet ist, wird der Holm 2 mit seinem oberen Ende am Anschlag 21 anliegen und es ist klar, daß eine Bewegung des Holmes 2 ausgeschlossen ist. Dabei befindet sich das Gatter in einer Daueröffnungsstellung.

Die Stellung der Fig. 2 wird dadurch erreicht, daß die oberen Enden der Holme 17 mittels des Gelenkes 22 mit einer Schubstange 23 verbunden sind, so daß über die Stange 23 eine Vielzahl von Viehständen bedienbar ist.

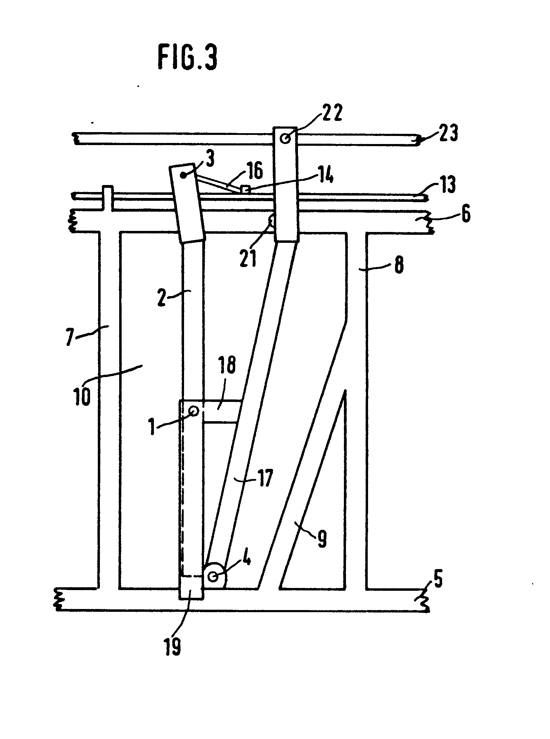

Die Fig. 3 zeigt die Stellung des erfindungsgemäßen Gatters, in der die Selbstfangeinrichtung in Funktion ist und auch die Raste 14 sich in der Fangstellung befindet.

Die Erfindung kann in verschiedener Weise abgewandelt werden. So kann auf den Holmteil 19 verzichtet werden, wenn durch andere Mittel sichergestellt ist, daß eine unerwünschte Betätigung des unteren Teils 11 des Holmes 2 ausgeschlossen ist, beispielsweise durch eine geeignete Anlage an einem Anschlag.

Auch die Bewegung des Lagers 1 in horizontaler Richtung kann durch andere Mittel verwirklicht werden. Wichtig ist jeweils, daß im unteren Teil der Öffnung 1o ausreichend Raum geschaffen wird, um ein Absenken des Tierkopfes ohne Behinderung zuzulassen und wobei eine Betätigung des Holmes 2 ausgeschlossen ist.

Patentanwalt

Dipl.-Ing. **HELMUT PFISTER**

Postscheckkonto München Nr. 1343 39
Bankkonto: Bayerische Vereinsbank Memmingen

21/5

**0005237**

## Patentansprüche

1. Selbstfanggatter für Rinder mit einem verschwenkbaren Holm, der aus einer geöffnten Stellung vom Tier durch Druck auf den unteren Holmteil in eine Schließstellung bewegbar ist, in der eine betätigbare Raste den Holm festhält, dadurch gekennzeichnet, daß das Verschwenklager (1) des Holmes (2) in eine Daueröffnungsstellung bewegbar ist.

2. Selbstfanggatter nach Anspruch 1, dadurch gekennzeichnet, daß der Träger (17) des Lagers (1) um ein Gelenk (4), das vorzugsweise in Bodennähe angeordnet ist, verschwenkbar ist.

Der Patentanwalt

Für das Auftragsverhältnis gilt die Gebührenordnung der Deutschen Patentanwaltskammer.
Erfüllungsort und Gerichtsstand Memmingen.

0005237

1/2

FIG.1

FIG.2

**FIG.3**

Europäisches
Patentamt

**EUROPÄISCHER RECHERCHENBERICHT**

0005237

Nummer der Anmeldung

EP 79 101 254.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 522 665 (PAULIN) <br> * Seite 1, rechte Spalte, Zeilen 16 bis 19 * <br> -- | 1 |
| | BE - A - 7 069 92 (SOETAERS) <br> * Seite 2, Zeilen 7 und 8 * <br> -- | 1,2 |
| A | DE - A - 2 632 057 (HÖRMANN) <br> * Fig. 1 * <br> -- | |
| A | DE - A - 2 525 947 (HÖRMANN) <br> * Fig. 3 * <br> -- | |
| A | DE - A - 2 446 026 (WEISSENHORNER) <br> * Fig. 1 * <br> -- | |
| A | DE - A - 2 316 736 (HÖRMANN) <br> * Fig. 1 * <br> -- | |
| A | CH - A - 577 783 (P. ARDIN & CIE) <br> * Fig. 1 bis 3 * <br> -- ./.. | |

**KLASSIFIKATION DER ANMELDUNG (Int.Cl.²)**

A 01 K 1/06
A 01 K 1/12

**RECHERCHIERTE SACHGEBIETE (Int. Cl.²)**

A 01 K 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 25-07-1979 | BITTNER |

EPA form 1503.1 06.78

Europäisches
Patentamt

**EUROPÄISCHER RECHERCHENBERICHT**

0005237
Nummer der Anmeldung

EP 79 101 254.5
- Seite 2 -

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | US – A – 4 037 566 (ALBERS) <br> * Fig. 1 und 2 * <br><br> ---- | | |
| | | | **RECHERCHIERTE SACHGEBIETE (Int. Cl.²)** |